# EUROPEAN PATENT SPECIFICATION

(11) **EP 3 385 929 B1**
(45) Date of publication and mention of the grant of the patent: **19.02.2020**
(21) Application number: 15911712.6
(22) Date of filing: 29.12.2015
(51) Int. Cl.: G08C 17/00, H04W 84/18, H04Q 9/00, H04L 29/08, H04L 29/06

(54) **SYSTEM, METHOD, AND DEVICE FOR INFORMATION TRANSMISSION**
SYSTEM, VERFAHREN UND VORRICHTUNG ZUR INFORMATIONSÜBERTRAGUNG
SYSTÈME, PROCÉDÉ ET DISPOSITIF DE TRANSMISSION D'INFORMATIONS

(43) Date of publication of application: 10.10.2018
(73) Proprietor: Huawei Technologies Co., Ltd., Longgang District Shenzhen, Guangdong 518129 (CN)
(72) Inventor: LIU, Yalin, Shenzhen, Guangdong 518129 (CN); ZHANG, Jun, Shenzhen, Guangdong 518129 (CN); QIAN, Xiangjiang, Shenzhen, Guangdong 518129 (CN); HU, Hengjie, Shenzhen, Guangdong 518129 (CN)
(74) Representative: Körber, Martin Hans
(86) International application number: PCT/CN2015/099329
(87) International publication number: WO 2017/113081

(56) References cited:
- CN-A- 103 023 534
- CN-A- 103 077 591
- CN-U- 202 260 626
- US-A1- 2002 120 671
- US-A1- 2009 310 501
- US-A1- 2012 029 850
- US-A1- 2013 135 115
- US-A1- 2013 282 196
- US-A1- 2014 201 381

## Description

### TECHNICAL FIELD

The present invention relates to the communications field, and more specifically, to an information transmission system in the communications field.

### BACKGROUND

A power system includes a power network and a communications network. The power network is used to transmit electricity, and the communications network is used to transmit information. The communications network in the power system may be classified into a backbone network, a metropolitan area network, and an access network. The access network is mainly used to collect monitoring information of a power distribution network at a city or county level and deliver control messages. For an existing access network technology, an architecture of a mobile communications network (such as a cellular system) is usually used, and a smart meter, a power distribution facility, and the like are directly connected to a cellular network, to collect monitoring information and deliver control messages. However, terminals, such as smart meters, of the power system are in relatively fixed positions and are usually in a huge quantity, and the architecture of the existing mobile communications network is not flexible enough to accommodate the access network of the power system, and cannot meet communication requirements of the power system.

US 2013/0282196 A1 discloses a home energy management system that includes a protocol conversion device configured to provide bi-directional communication between a networking device and one or more energy meters, wherein the protocol conversion device connects to the networking device via a transmission control protocol/Internet protocol (TCP/IP) and connects to one or more energy meters via one or more communication protocols supported by one or more energy meters. The home energy management system further includes the networking device, connected to the protocol conversion device via the TCP/IP connection, configured to receive, from the protocol conversion device, data packets generated by the one or more energy meters, and transmit the data packets to a remote server.

### SUMMARY

Embodiments of the present invention provide an information transmission system. The information transmission system can improve networking flexibility of a communications network in an existing power system, so that network construction costs can be reduced, and communication requirements of the power system can be better met.

According to a first aspect, an information transmission system is provided, including: a power system control center, a network device, a transmission device, and at least one system terminal. The network device belongs to a wide area network. Some or all system terminals of the at least one system terminal are configured to send at least one first report message to the transmission device, where the at least one first report message is transmitted by using a first network transmission protocol. The transmission device is configured to send at least one second report message to the power system control center by using the network device based on information in the at least one first report message, where the at least one second report message is transmitted by using a second network transmission protocol that is different from the first network transmission protocol, wherein the system further comprises a first information processing device, and the first information processing device is configured to: receive the at least one first report message sent by some or all system terminals of the at least one system terminal; process the at least one first report message based on content or a report time of the at least one first report message to obtain a processed message, wherein the processed message comprises the information in the at least one first report message; send the processed message to the transmission device by using the first network transmission protocol; and correspondingly, in the aspect of sending at least one second report message to the power system control center by using the network device based on information in the at least one first report message, the transmission device is configured to: generate the at least one second report message based on the processed message and the second network transmission protocol; and send the at least one second report message to the power system control center by using the network device.

The foregoing report message may be autonomously reported by a terminal, or may be triggered and reported in response to a control message delivered by the power system control center. In this way, the power system control center may know related information of a system terminal based on the second report message. For example, when the system terminal is an electricity meter of a user, the power system control center may know a power consumption status of the user.

An existing cellular system for which mobility of terminal positions is fully considered has a complex mobility management module, but in a power distribution network, positions of a smart meter and a power distribution terminal are relatively fixed. Therefore, the mobility management module is not required in the power distribution network at all. In addition, because one base station can support a limited quantity of user equipments, a large quantity of base stations need to be built if a smart meter, a power distribution facility, and the like are directly connected to the cellular system, resulting in extremely high construction costs; and if only a relatively small quantity of base stations are built, connection requirements of a large quantity of smart meters and power distribution facilities cannot be met.

According to the information transmission system in this embodiment of the present invention, first, a plurality of system terminals are connected to the transmission device, the transmission device receives report information sent by the plurality of system terminals and processes the report information, and then the transmission device communicates with the power system control center by using the wide area network. This can avoid relatively heavy load of the wide area network due to direct communication between the system terminals and the wide area network, increase a network throughput, and therefore meet requirements of communication between the plurality of system terminals and a power system terminal. In addition, according to the present invention, when the information transmission system is constructed by using the wide area network, because the system terminals do not need to be directly connected to the network device, a quantity of network devices can be reduced, for example, a quantity of base stations can be reduced, thereby reducing network construction costs.

With reference to the first aspect, in a first possible implementation of the first aspect, in the aspect of sending at least one second report message to the power system control center by using the network device based on information in the at least one first report message, the transmission device may be configured to: process the at least one first report message based on content or a report time of the at least one first report message to obtain processed information; generate the at least one second report message based on the processed information and the second network transmission protocol; and send the at least one second report message to the power system control center by using the network device.

With reference to the foregoing possible implementation of the first aspect, in a second possible implementation of the first aspect, in the aspect of processing the at least one first report message based on content or a report time of the at least one first report message, the transmission device may be configured to: screen the information in the at least one first report message based on the content of the at least one first report message to obtain screened information; and correspondingly, in the aspect of generating the at least one second report message based on the processed information and the second network transmission protocol, the transmission device may be configured to generate the at least one second report message based on the screened information and the second network transmission protocol; or aggregate the information in the at least one first report message based on the report time of the at least one first report message to obtain aggregated information; and correspondingly, in the aspect of generating the at least one second report message based on the processed information and the second network transmission protocol, the transmission device is configured to generate the at least one second report message based on the aggregated information and the second network transmission protocol.

Screening or aggregating information in a first report message before transmission can increase a network throughput and reduce load of the wide area network.

With reference to the foregoing possible implementation of the first aspect, in a third possible implementation of the first aspect, in the aspect of processing the at least one first report message based on content or a report time of the at least one first report message to obtain a processed message, the first information processing device may be configured to: screen the information in the at least one first report message based on the content of the at least one first report message to obtain the processed message; or aggregate the information in the at least one first report message based on the report time of the at least one first report message to obtain the processed message.

With reference to the foregoing possible implementation of the first aspect, in a fourth possible implementation of the first aspect, the system further includes a second information processing device, where the second information processing device may be configured to: receive the at least one second report message sent by the transmission device; process the at least one second report message based on content or a report time of the at least one second report message to obtain at least one processed message; and send the at least one processed message to the power system control center by using the network device, where the at least one processed message is transmitted by using the second network transmission protocol.

With reference to the foregoing possible implementation of the first aspect, in a fifth possible implementation of the first aspect, in the aspect of processing the at least one second report message based on content or a report time of the at least one second report message, the second information processing device may be configured to: screen information in the at least one second report message based on the content of the at least one second report message to obtain the processed message; or aggregate information in the at least one second report message based on the time of the at least one second report message to obtain the processed message.

With reference to the foregoing possible implementations of the first aspect, in a sixth possible implementation of the first aspect, the power system control center may further send at least one first control message to the transmission device by using the network device, where the at least one first control information is transmitted by using the second network transmission protocol; the transmission device is configured to send at least one second control message to the at least one system terminal based on information in the at least one first control message, where the at least one second control message is transmitted by using the first network transmission protocol that is different from the second network transmission protocol.

According to a second aspect, an information transmission system is provided, including a power system control center, a network device, a first transmission device, a second transmission device, and at least one system terminal. The network device belongs to a wide area network. The wide area network may be a cellular network, or may be a cable Internet. Some or all system terminals of the at least one system terminal are configured to send at least one first report message to the first transmission device, where the at least one first report message is transmitted by using a first network transmission protocol. The first transmission device is configured to send at least one second report message to the second transmission device based on information in the at least one first report message, where the at least one second report message is transmitted by using a second network transmission protocol that is different from the first network protocol. The second transmission device is configured to send at least one third report message to the power system control center by using the network device based on information in the at least one second report message, where the at least one third report message is transmitted by using a third network transmission protocol that is different from the first network protocol and the second network transmission protocol; wherein the system further comprises a first information processing device, and the first information processing device is configured to: receive the at least one first report message sent by some or all system terminals of the at least one system terminal; process the at least one first report message based on content or a report time of the at least one first report message to obtain a first processed message, wherein the first processed message comprises the information in the at least one first report message; send the first processed message to the first transmission device; and correspondingly, in the aspect of sending at least one second report message to the second transmission device based on information in the at least one first report message, the first transmission device is configured to: send the at least one second report message to the second transmission device based on the first processed message.

In this way, the power system control center may know related information of a system terminal based on the third report message. For example, when the system terminal is an electricity meter of a user, the power system control center may know a power consumption status of the user.

According to the information transmission system in this embodiment of the present invention, the first transmission device receives report information sent by a plurality of system terminals and processes the report information, then the second transmission device processes information sent by the first transmission device, and the second transmission device communicates with the power system control center by using the wide area network. This can avoid relatively heavy load of the wide area network due to direct communication between the system terminals and the wide area network, increase a network throughput, and therefore meet requirements of communication between the plurality of system terminals and a power system terminal. In addition, according to the present invention, when the information transmission system is constructed by using the wide area network, because the system terminals do not need to be directly connected to the network device, a quantity of network devices can be reduced, for example, a quantity of base stations can be reduced, thereby reducing network construction costs.

With reference to the second aspect, in a first possible implementation of the second aspect, in the aspect of sending at least one second report message to the second transmission device based on information in the at least one first report message, the first transmission device may be configured to: process the at least one first report message based on content or a report time of the at least one first report message to obtain first processed information; generate the at least one second report message based on the first processed information and the second network transmission protocol; and send the at least one second report message to the second transmission device.

With reference to the foregoing possible implementations of the second aspect, in a second possible implementation of the second aspect, in the aspect of sending at least one third report message to the power system control center by using the network device based on information in the at least one second report message, the second transmission device may be configured to: process the at least one second report message based on content or a report time of the at least one second report message to obtain second processed information; generate the at least one third report message based on the second processed information and the third network transmission protocol; and send the at least one third report message to the power system control center by using the network device.

With reference to the foregoing possible implementation of the second aspect, in a third possible implementation of the second aspect, in the aspect of processing the at least one first report message based on content or a report time of the at least one first report message, the first transmission device may be configured to: screen the information in the at least one first report message based on the content of the at least one first report message to obtain first screened information; and correspondingly, in the aspect of generating the at least one second report message based on the first processed information and the second network transmission protocol, the first transmission device is configured to generate the at least one second report message based on the first screened information and the second network transmission protocol; or aggregate the information in the at least one first report message based on the report time of the at least one first report message to obtain first aggregated information; and correspondingly, in the aspect of generating the at least one second report message based on the first processed information and the second network transmission protocol, the first transmission device may be configured to generate the at least one second report message based on the first aggregated information and the second network transmission protocol.

Screening or aggregating information in a first report message before transmission can increase a network throughput and reduce load of the wide area network.

With reference to the foregoing possible implementation of the second aspect, in a fourth possible implementation of the second aspect, in the aspect of processing the at least one second report message based on content or a report time of the at least one second report message to obtain second processed information, the second transmission device may be configured to: screen the information in the at least one second report message based on the content of the at least one second report message to obtain second screened information; and correspondingly, in the aspect of generating the at least one third report message based on the second processed information and the third network transmission protocol, the second transmission device is configured to generate the at least one third report message based on the second screened information and the third network transmission protocol; or aggregate the information in the at least one second report message based on the report time of the at least one second report message to obtain second aggregated information; and correspondingly, in the aspect of generating the at least one third report message based on the second processed information and the third network transmission protocol, the second transmission device is configured to generate the at least one third report message based on the second aggregated information and the third network transmission protocol.

Screening or aggregating information in a first report message before transmission can increase a network throughput and reduce load of the wide area network.

With reference to the foregoing possible implementations of the second aspect, in a fifth possible implementation of the second aspect, the system may further include a second information processing device, where the second information processing device may be configured to: receive the at least one second report message sent by the second transmission device; process the at least one second report message based on content or a report time of the at least one second report message to obtain a second processed message, where the second processed message includes the information in the at least one second report message; and send the second processed message to the second transmission device; and correspondingly, in the aspect of sending at least one third report message to the power system control center by using the network device based on information in the at least one second report message, the second transmission device may be configured to: send the at least one third report message to the power system control center by using the network device based on the second processed message.

With reference to the foregoing possible implementation of the second aspect, in a sixth possible implementation of the second aspect, in the aspect of processing the at least one first report message based on content or a report time of the at least one first report message to obtain a first processed message, the first information processing device may be configured to: screen the information in the at least one first report message based on the content of the at least one first report message to obtain the first processed message; or aggregate the information in the at least one first report message based on the report time of the at least one first report message to obtain the first processed message.

With reference to the foregoing possible implementation of the second aspect, in a seventh possible implementation of the second aspect, the system further includes a third information processing device, where the third information processing device may be configured to: receive the at least one second report message sent by the first transmission device; process the at least one second report message based on content or a report time of the at least one second report message to obtain a first processed message; and send the first processed message to the second transmission device; and correspondingly, the second transmission device may be configured to: generate the at least one third report message based on the first processed message and the third network transmission protocol; and send the third report message to the power system control center by using the network device.

With reference to the foregoing possible implementation of the second aspect, in an eighth possible implementation of the second aspect, in the aspect of processing the at least one second report message based on content or a report time of the at least one second report message, the third information processing device may be configured to: screen the information in the at least one second report message based on the content of the at least one second report message to obtain the first processed message; or aggregate the information in the at least one second report message based on the time of the at least one second report message to obtain the first processed message.

According to the information transmission system in the embodiments of the present invention, relatively heavy load of the wide area network due to direct communication between the system terminals and the wide area network can be avoided, and a network throughput can be increased, thereby meeting requirements of communication between the plurality of system terminals and a power system terminal. In addition, according to the present invention, when the information transmission system is constructed by using the wide area network, because the system terminals do not need to be directly connected to the network device, a quantity of network devices can be reduced, for example, a quantity of base stations can be reduced, thereby reducing network construction costs.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of an information transmission system according to an embodiment of the present invention;
FIG. 2 is a schematic block diagram of an information transmission system according to another embodiment of the present invention;
FIG. 3 is a schematic block diagram of an information transmission system according to an embodiment of the present invention;
FIG. 4 is a schematic block diagram of an information transmission system according to an embodiment of the present invention;
FIG. 5 is a schematic block diagram of an information transmission system according to another embodiment of the present invention;
FIG. 6 is a schematic block diagram of an information transmission system according to an embodiment of the present invention;
FIG. 7 is a schematic block diagram of an information transmission system according to another embodiment of the present invention;
FIG. 8 is a schematic flowchart of an information transmission method;
FIG. 9 is a schematic block diagram of an information transmission device; and
FIG. 10 is a schematic block diagram of an information transmission device.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

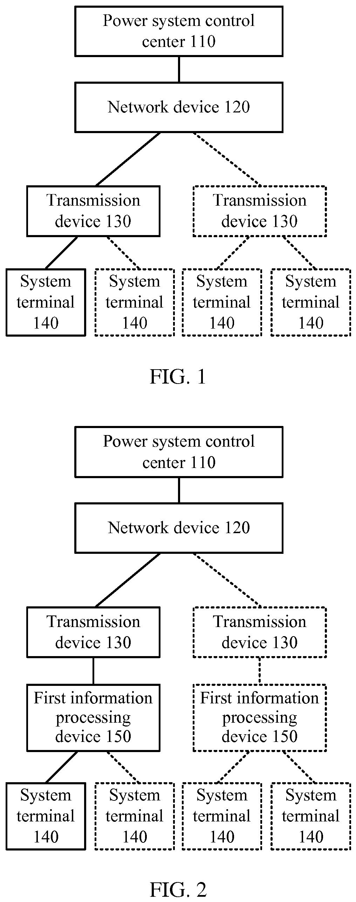

FIG. 1 shows an information transmission system according to an embodiment of the present invention. The system includes a power system control center 110, a network device 120, a transmission device 130, and a system terminal 140.

The network device 120 belongs to a wide area network. The wide area network may be a cellular network, or may be a cable Internet.

The cellular network may be a Global System for Mobile Communications (Global System for Mobile Communications, GSM) network, a general packet radio system (General Packet Radio System, GPRS) communications network, a Universal Mobile Telecommunications System (UMTS) network, a Long Term Evolution (Long Term Evolution, LTE) communications network, a Long Term Evolution Advanced (LTE-Advanced, LTE-A) network, a future 5G network, or the like. A specific form of the cellular network is not limited in the present invention.

The system terminal 140 may be a monitoring terminal, or may be a metering terminal. The monitoring terminal may be a power distribution component or the like, and the metering terminal may be a smart meter or the like. The system may include one system terminal, or include a plurality of system terminals. For example, five system terminals 140 may be connected to one transmission device 130. A specific quantity of the system terminals 140 connected to one transmission device 130 is related to a loading capability of the transmission device 130, and FIG. 1 is merely described by using an example that one transmission device 130 is connected to two system terminals 140.

Some or all system terminals of at least one system terminal 140 may send at least one first report message to the transmission device 130. The at least one first report message is transmitted by using a first network transmission protocol. The transmission device 130 may send at least one second report message to the power system control center 110 by using the network device 120 based on information in the at least one first report message. The at least one second report message is transmitted by using a second network transmission protocol that is different from the first network protocol.

For example, when the system terminal 140 is a smart meter, the smart meter may report information to the transmission device 130 at regular intervals, for example, at the beginning of each month, where the information may represent a power consumption status of a user. The transmission device may perform corresponding processing, such as protocol conversion, on the information, and send processed information to the network device 120. Then, the network device 120 sends the processed information to the power system control center 110. The power system control center 110 may know the power consumption status of the user by using the processed information, to achieve an objective of intelligent monitoring.

An existing cellular system for which mobility of terminal positions is fully considered has a complex mobility management module, but in a power distribution network, positions of a smart meter and a power distribution terminal are relatively fixed. Therefore, the mobility management module is not required in the power distribution network at all. In addition, because one base station can support a limited quantity of user equipments, a large quantity of base stations need to be built if a smart meter, a power distribution facility, and the like are directly connected to the cellular system, resulting in extremely high construction costs; and if only a relatively small quantity of base stations are built, connection requirements of a large quantity of smart meters and power distribution facilities cannot be met.

According to the information transmission system in this embodiment of the present invention, first, a plurality of system terminals are connected to the transmission device, the transmission device receives report information sent by the plurality of system terminals and processes the report information, and then the transmission device communicates with the power system control center by using the wide area network. This can avoid relatively heavy load of the wide area network due to direct communication between the system terminals and the wide area network, increase a network throughput, and therefore meet requirements of communication between the plurality of system terminals and a power system terminal. In addition, according to the present invention, when the information transmission system is constructed by using the wide area network, because the system terminals do not need to be directly connected to the network device, a quantity of network devices can be reduced, for example, a quantity of base stations can be reduced, thereby reducing network construction costs.

It should be understood that, in this embodiment of the present invention, the system may include only one network device 120, or include a plurality of network devices 120, and each network device 120 may be connected to at least one transmission device 130. FIG. 1 is merely described by using an example that one network device 120 in the system is connected to two transmission devices 130, and this is merely for ease of understanding. A quantity of devices and terminals and a connection manner in specific networking are not limited in this embodiment of the present invention. Correspondingly, for ease of description, the embodiments of the present invention are merely described by using a quantity of corresponding devices or apparatuses in FIG. 2 to FIG. 7 and a connection manner shown in the figures as an example, and any corresponding variation falls within the scope of the embodiments of present invention.

Optionally, when sending the at least one second report message to the power system control center 110 by using the network device 120 based on the information in the at least one first report message, the transmission device 130 may process the at least one first report message based on content or a report time of the at least one first report message to obtain processed information, then generate the at least one second report message based on the processed information and the second network transmission protocol, and finally, send the at least one second report message to the power system control center 110 by using the network device 120.

As an example, the transmission device 130 may screen the information in the at least one first report message based on the content of the at least one first report message to obtain screened information, then generate the at least one second report message based on the screened information and the second network transmission protocol, and finally, send the at least one second report message to the power system control center 110 by using the network device 120.

As another example, the transmission device 130 may further aggregate the information in the at least one first report message based on the content of the at least one first report message to obtain aggregated information, then generate the at least one second report message based on the aggregated information and the second network transmission protocol, and finally, send the at least one second report message to the power system control center 110 by using the network device 120.

Specifically, the transmission device 130 may screen the at least one first report message, such as metering information and/or monitoring information and upload wanted information, but not upload unwanted information. Certainly, the transmission device 130 may not screen the at least one first report message, and directly upload the at least one first report message to the network device 120. The transmission device 130 may further wait until a plurality of first report messages, such as metering information and/or monitoring information, are received, and then perform aggregation and uploading. More specifically, the transmission device 130 may set an upload period, and periodically upload messages. A same period or different periods may be set for different types of system terminals. For example, when the system terminals are mainly metering terminals, such as smart meters, and the first report messages are mainly metering information, the metering information may be uploaded in the following manners.
(1) Set a period, perform no determining, and directly perform uploading.
   Real-time information, namely a first report message, fed back by a metering terminal, such as a smart meter, may be uploaded every 15 minutes. For example, for a plurality of metering terminals, information of a metering terminal 1 may be uploaded at moments such as T1, T1+15 min, and the like, and information of a metering terminal 2 may be uploaded at moments such as T2, T2+15 min, and the like. Different periods may also be set for different terminals. For example, a period of a terminal 1 is 15 minutes, and a period of a terminal 2 is 40 minutes.
(2) Set a period, perform no determining, and perform aggregation and uploading.
   Both the information of the metering terminal 1 and the information of the metering terminal 2 may be uploaded at moments such as T0, T0+15 min, and the like.
(3) Set a period, perform determining, when there is variation, directly perform uploading, and when there is no variation, do not perform uploading.
   Determining may be performed on information of a metering terminal every five minutes, if there is variation, the information is uploaded; otherwise, the information is not uploaded.
(4) Set a period, perform determining, and perform aggregation and uploading.

Determining is performed on metering information that uses a same transmission protocol, and metering information that is varied in this period is aggregated and uploaded.

Monitoring information mainly comes from a monitoring terminal, such as an electricity distribution automation terminal. The transmission device 130 may also upload the monitoring information in the foregoing metering information uploading manners. For simplicity, details are not described herein again.

In addition, for a feedback that is from a power terminal and is about such as an electric wire, determining may be performed first. If the feedback exceeds a threshold 1 and is lower than a threshold 2, the feedback is uploaded; otherwise, the feedback is not uploaded. The threshold herein may be a rated voltage of the electric wire, or a rated current of the electric wire. A specific form of the threshold is not limited in the present invention.

It should be noted that, the transmission device 130 needs to perform protocol conversion on screened or aggregated information, that is, the screened information or the aggregated information, in the foregoing description, so that the screened information or the aggregated information is transmitted by using the second network transmission protocol, to ensure that the network device 120 can correctly receive the screened information or the aggregated information.

Therefore, according to the information transmission system in this embodiment of the present invention, screening or aggregating information in a first report message before transmission can increase a network throughput and reduce load of the wide area network or the network device 120.

Optionally, as shown in FIG. 2, the system may further include a first information processing device 150. The first information processing device 150 may receive the at least one first report message sent by some or all system terminals of the at least one system terminal 140, then process the at least one first report message based on content or a report time of the at least one first report message to obtain a processed message, where the processed message includes the information in the at least one first report message, and finally, send the processed message to the transmission device 130 by using the first network transmission protocol. In this case, when sending the at least one second report message to the power system control center 110 by using the network device 120 based on the information in the at least one first report message, the transmission device 130 may first generate the at least one second report message based on the processed message and the second network transmission protocol, and then send the at least one second report message to the power system control center 110 by using the network device 120.

To be specific, the first information processing device 150 may first process the first report message based on the content or the report time of the first report message, and then send the processed message to the transmission device 130. The transmission device 130 performs protocol conversion on the processed message, and sends the processed message by using the second network transmission protocol.

Specifically, the first information processing device 150 may screen information in the first report message based on the content of the first report message to obtain the foregoing processed message. The first information processing device 150 may further aggregate the information in the first report message based on the report time of the first report message to obtain the foregoing processed message.

For a specific operation that the first information processing device 150 screens or aggregates the information in the first report message, refer to the foregoing manner in which the transmission device 130 screens or aggregates the information in the first report message. For simplicity, details are not described herein again.

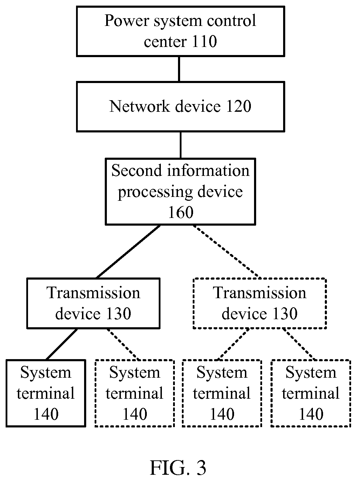

Optionally, as shown in FIG. 3, the system may further include a second information processing device 160. The second information processing device 160 may be configured to: receive the at least one second report message sent by the transmission device 130, then process the at least one second report message based on content or a report time of the at least one second report message to obtain at least one processed message, and finally, send the at least one processed message to the power system control center 110 by using the network device 120. The at least one processed message is transmitted by using the second network transmission protocol.

Specifically, information in the second report message received by the second information processing device 160 is the same as information in the first report message, and only a different network transmission protocol is used. After receiving the second report message, the second information processing device 160 may screen or aggregate the information in the second report message based on the content or the report time of the second report message to obtain the foregoing processed message, and then send the processed message to the power system control center 110 by using the network device 120.

Similarly, for a specific operation that the second information processing device 160 screens or aggregates the information in the second report message, refer to the foregoing manner in which the transmission device 130 screens or aggregates the information in the first report message. For simplicity, details are not described herein again.

Optionally, the power system control center 110 may further send at least one first control message to the transmission device 130 by using the network device 120. The at least one first control information is transmitted by using the second network transmission protocol. The transmission device 130 may send at least one second control message to the at least one system terminal 140 based on information in the at least one first control message. The at least one second control message is transmitted by using the first network transmission protocol that is different from the second network transmission protocol.

For a manner in which the transmission device 130 processes the control information, refer to the foregoing manner of processing report information. For simplicity, details are not described herein again.

As an example, at least one report message is a feedback message in response to the at least one second control message.

Specifically, for example, when the power system control center 110 needs to know some parameters of an electric wire of a line, the power system control center 110 may send a control message to the transmission device 130 by using the network device 120; after receiving the control message, the transmission device 130 generates, based on information in the control message, another control message related to the information, and sends the another control message to the system terminal 140 by using the second network transmission protocol. After receiving the message, a monitoring terminal on the line or on the electric wire performs corresponding detection on the electric wire, and sends detection information, namely a report message, to the transmission device 130. The transmission device may perform related processing on the report message, for example, screen information in the report message, and send a processed message to the power system control center 110 by using the network device 120. In this way, an objective of intelligent detection may be achieved.

Optionally, the first network transmission protocol may be a wireless local area network Wi-Fi protocol.

To be specific, the system terminal 140 sends the first report message by using the Wi-Fi protocol, or receives the second control message that is transmitted by using the Wi-Fi protocol.

Optionally, the first network transmission protocol may be further an IPv6 over low power wireless personal area network (6LoWPAN) protocol or a ZigBee protocol.

To be specific, the system terminal 140 sends the first report message by using the 6LoWPAN protocol or the ZigBee protocol, or receives the second control message that is transmitted by using the 6LoWPAN protocol or the ZigBee protocol.

It should be noted that a specific communications protocol used by the system terminal is not limited in this embodiment of the present invention. For example, because a personal area network constructed based on the 6LoWPAN protocol can meet a requirement of a system terminal of low power consumption or a low rate, in the information transmission system, a system terminal, such as a smart meter, that has a low requirement on a transmission rate may communicate with the transmission device 120 by using the 6LoWPAN protocol. Because some detection terminals need to report detected information in real time, the detection terminals may communicate with the transmission device 120 by using the Wi-Fi protocol.

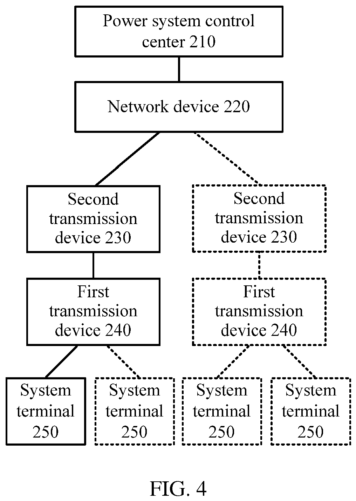

FIG. 4 shows an information transmission system according to another embodiment of the present invention. The system includes a power system control center 210, a network device 220, a first transmission device 240, a second transmission device 230, and a system terminal 250.

The network device 220 belongs to a wide area network. The wide area network may be a cellular network, or may be a cable Internet.

For a specific form of the cellular network, refer to a network form used by the network device 120 in the system shown in FIG. 3. For simplicity, details are not described herein again.

Similarly, for a specific form of the system terminal 250, also refer to the system terminal 140 in the system shown in FIG. 3. For simplicity, details are not described herein again.

Some or all system terminals of at least one system terminal 250 may send at least one first report message to the first transmission device 240. The at least one first report message is transmitted by using a first network transmission protocol. The first transmission device 240 may send at least one second report message to the second transmission device 230 based on information in the at least one first report message. The at least one second report message is transmitted by using a second network transmission protocol. The second transmission device 230 may send at least one third report message to the power system control center 210 by using the network device 220 based on information in the at least one second report message. The at least one third report message is transmitted by using a third network transmission protocol, and the first network transmission protocol, the second network transmission protocol, and the third network transmission protocol are different from each other.

For example, when the system terminal is a smart meter, a power consumption status of a user that is monitored by a plurality of smart meters may be first reported to the first transmission device 240. The first transmission device 240 may process a reported message, and then transmits the reported message to the second transmission device 230 by using the second network transmission protocol. The second network device 230 may directly perform protocol conversion on the reported message, and then send the reported message to the network device 220. The network device 220 may send, to the power system control center 210, the message sent by the second transmission device 230. In this way, the power system control center may know the power consumption status of the user based on the message reported by the second network device, to achieve an objective of intelligent monitoring.

According to the information transmission system in this embodiment of the present invention, the first transmission device receives report information sent by a plurality of system terminals and processes the report information, then the second transmission device processes information sent by the first transmission device, and the second transmission device communicates with the power system control center by using the wide area network. This can avoid relatively heavy load of the wide area network due to direct communication between the system terminals and the wide area network, increase a network throughput, and therefore meet requirements of communication between the plurality of system terminals and a power system terminal. In addition, according to the present invention, when the information transmission system is constructed by using the wide area network, because the system terminals do not need to be directly connected to the network device, a quantity of network devices can be reduced, for example, a quantity of base stations can be reduced, thereby reducing network construction costs.

Optionally, the first transmission device 240 may process the at least one first report message based on content or a report time of the at least one first report message to obtain first processed information; generate the at least one second report message based on the first processed information and the second network transmission protocol; and send the at least one second report message to the second transmission device 230.

For a specific manner in which the first transmission device 240 processes the first report message, refer to the manner in which the transmission device 130 processes the first report message in FIG. 1 to FIG. 3. For simplicity, details are not described herein again.

Optionally, the second transmission device 230 may process the at least one second report message based on content or a report time of the at least one second report message to obtain second processed information; generate the at least one third report message based on the second processed information and the third network transmission protocol; and send the at least one third report message to the power system control center 210 by using the network device 220.

For a specific manner in which the second transmission device 230 processes the second report message, refer to the manner in which the transmission device 130 processes the first report message in FIG. 1 to FIG. 3. For simplicity, details are not described herein again.

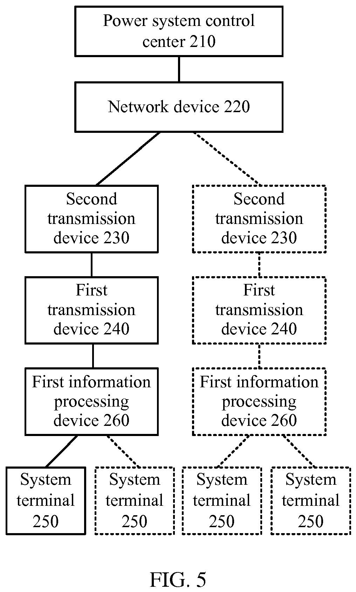

Optionally, as shown in FIG. 5, the system may further include a first information processing device 260. The first information processing device 260 may receive the at least one first report message sent by some or all system terminals of the at least one system terminal 250, then process the at least one first report message based on content or a report time of the at least one first report message, and send an obtained first processed message to the first transmission device, where the first processed message includes the information in the at least one first report message. In this case, the first transmission device 240 may send the at least one second report message to the second network transmission device 230 based on the first processed message.

Optionally, the first information processing device 260 screens the information in the at least one first report message based on the content of the at least one first report message to obtain the first processed message. In addition, the first information processing device 260 may further aggregate the information in the at least one first report message based on the report time of the at least one first report message to obtain the first processed message.

For a specific manner in which the first information processing device 260 screens or aggregates the information in the first report message, refer to the foregoing manner in which the transmission device 130 screens or aggregates the at least one first report message. For simplicity, details are not described herein again.

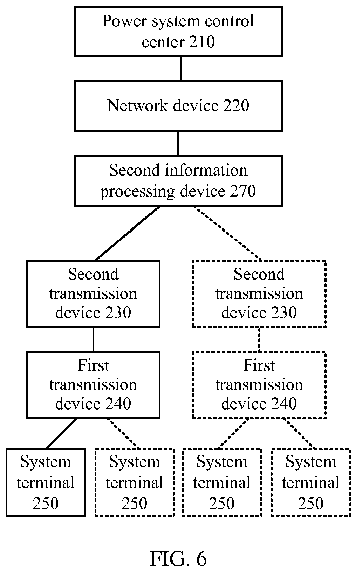

Optionally, as shown in FIG. 6, the system may further include a second information processing device 270. The second information processing device 270 may receive the at least one second report message sent by the second network transmission device 230, then process the at least one second report message based on content or a report time of the at least one second report message, and send an obtained second processed message to the second transmission device 230. The second processed message includes the information in the at least one second report message. In this case, the second transmission device 230 may send the at least one third report message to the power system control center 210 by using the network device 220 based on the second processed message.

Optionally, the second information processing device 270 screens the information in the at least one second report message based on the content of the at least one second report message to obtain the second processed message. In addition, the second information processing device 270 may further aggregate the information in the at least one second report message based on the report time of the at least one second report message to obtain the second processed message.

For a specific manner in which the second information processing device 270 screens or aggregates the information in the second report message, refer to the foregoing manner in which the transmission device 130 screens or aggregates the at least one first report message. For simplicity, details are not described herein again.

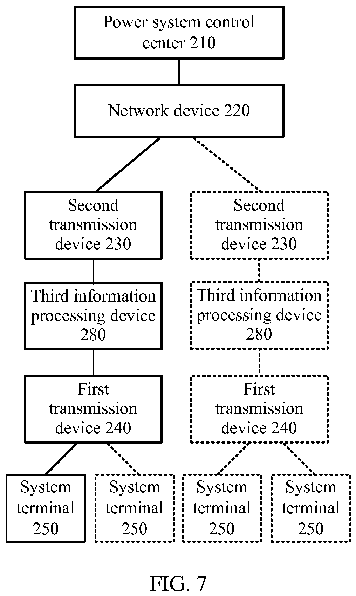

Optionally, as shown in FIG. 7, the system may further include a third information processing device 280. The third information processing device 280 may receive the at least one second report message sent by the first transmission device 240, then process the at least one second report message based on content or a report time of the at least one second report message, and send an obtained first processed message to the second transmission device 230. In this case, the second transmission device 230 may generate the at least one third report message based on the first processed message and the third network transmission protocol, and send the third report message to the power system control center 210 by using the network device 220.

Optionally, the third information processing device 280 may screen the information in the at least one second report message based on the content of the at least one second report message to obtain the first processed message. In addition, the third information processing device 280 may further aggregate the information in the at least one second report message based on the time of the at least one second report message to obtain the first processed message.

Optionally, the second network transmission protocol is a wireless local area network Wi-Fi protocol.

Optionally, the first network transmission protocol is an IPv6 over low power wireless personal area network (6LoWPAN) protocol or a ZigBee protocol.

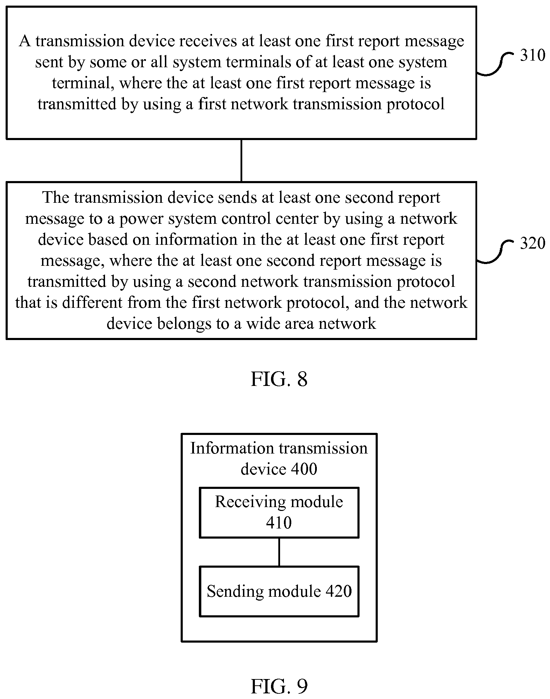

The foregoing describes in detail the information transmission systems according to the embodiments of the present invention with reference to FIG. 1 to FIG. 7, and the following describes in detail an information transmission method with reference to FIG. 8.

FIG. 8 shows an information transmission method. The method may be executed by the transmission device 130 in FIG. 1 to FIG. 3, or may be executed by the first transmission device 240 in FIG. 4 to FIG. 6. Specific execution is not limited.

S310. A transmission device receives at least one first report message sent by some or all system terminals of at least one system terminal, where the at least one first report message is transmitted by using a first network transmission protocol.

S320. The transmission device sends at least one second report message to a power system control center by using a network device based on information in the at least one first report message, where the at least one second report message is transmitted by using a second network transmission protocol that is different from the first network protocol, and the network device belongs to a wide area network.

According to the information transmission method, report information sent by a plurality of system terminals is received, and the report information is processed, and then the transmission device communicates with the power system control center by using the wide area network. This can avoid relatively heavy load of the wide area network due to direct communication between the system terminals and the wide area network, increase a network throughput, and therefore meet requirements of communication between the plurality of system terminals and a power system terminal. In addition, when the information transmission system is constructed by using the wide area network, because the system terminals do not need to be directly connected to the network device, a quantity of network devices can be reduced, for example, a quantity of base stations can be reduced, thereby reducing network construction costs.

Optionally, in S320, when the transmission device sends the at least one second report message to the power system control center by using the network device based on the information in the at least one first report message, the transmission device may process the at least one first report message based on content or a report time of the at least one first report message to obtain processed information, then generate the at least one second report message based on the processed information and the second network transmission protocol, and finally, the transmission device may send the at least one second report message to the power system control center by using the network device.

Optionally, when processing the at least one first report message based on the content or the report time of the at least one first report message to obtain the processed message, the transmission device may screen the information in the at least one first report message based on the content of the at least one first report message to obtain screened information, and generate the at least one second report message based on the screened information and the second network transmission protocol.

Optionally, when processing the at least one first report message based on the content or the report time of the at least one first report message to obtain the processed message, the transmission device may further aggregate the at least one piece of first report information based on the report time of the at least one first report message to obtain aggregated information, and generate the at least one second report message based on the aggregated information and the second network transmission protocol.

For a specific manner in which the transmission device screens or aggregates the at least one piece of first report information, refer to the foregoing manner in which the transmission device 130 in the system processes the at least one first report message. For simplicity, details are not described herein again.

FIG. 9 shows an information transmission device 400. The information transmission device 400 includes a receiving module 410 and a sending module 420.

The receiving module 410 may be configured to receive at least one first report message sent by some or all system terminals of at least one system terminal. The at least one first report message is transmitted by using a first network transmission protocol.

The sending module 420 may be configured to send at least one second report message to a power system control center by using a network device based on information in the at least one first report message.

The network device belongs to a wide area network. The wide area network may be a cellular network or a cable Internet.

The at least one second report message is transmitted by using a second network transmission protocol that is different from the first network protocol.

The information transmission device receives report information sent by a plurality of system terminals, processes the report information, and then communicates with the power system control center by using the wide area network. This can avoid relatively heavy load of the wide area network due to direct communication between the system terminals and the wide area network, increase a network throughput, and therefore meet requirements of communication between the plurality of system terminals and a power system terminal. In addition, when the information transmission system is constructed by using the wide area network, because the system terminals do not need to be directly connected to the network device, a quantity of network devices can be reduced, for example, a quantity of base stations can be reduced, thereby reducing network construction costs.

Optionally, in the aspect of sending at least one second report message to a power system control center by using a network device based on information in the at least one first report message, the sending module 420 is configured to: process the at least one first report message based on content or a report time of the at least one first report message to obtain processed information; generate the at least one second report message based on the processed information and the second network transmission protocol; and send the at least one second report message to the power system control center by using the network device. Correspondingly, in the aspect of generating the at least one second report message based on the processed information and the second network transmission protocol, the sending module 420 is specifically configured to generate the at least one second report message based on the screened information and the second network transmission protocol.

Optionally, in the aspect of processing the at least one first report message based on content or a report time of the at least one first report message to obtain processed information, the sending module 420 is specifically configured to: aggregate the at least one piece of first report information based on the report time of the at least one first report message to obtain aggregated information; and correspondingly, in the aspect of generating the at least one second report message based on the processed information and the second network transmission protocol, the sending module 420 is specifically configured to generate the at least one second report message based on the aggregated information and the second network transmission protocol.

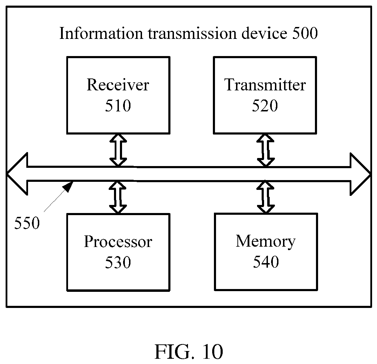

It should be noted that, the receiving module 410 may be implemented by a processor 530 by invoking a receiver 510, and the sending module may be implemented by the processor 530 by invoking a transmitter 520, or the receiving module 410 and the sending module 420 may be implemented by the processor by invoking a communications interface (having functions of both the receiver and the transmitter). As shown in FIG. 10, an information transmission device 500 may include the receiver 510, the transmitter 520, the processor 530, a memory 540, and a system bus 550. The memory 540 may be configured to store code and the like executed by the processor 530, the processor is configured to invoke the receiver 510 and the transmitter 520 by executing the code stored in the memory, to implement the method corresponding to FIG. 8.

Components of the information transmission device 500 are coupled together by using the system bus 550, where in addition to a data bus, the system bus 550 further includes a power bus, a control bus, and a status information bus.

The information transmission device 400 shown in FIG. 9 or the information transmission device 500 shown in FIG. 10 can implement processes in the foregoing method shown in FIG. 8. To avoid repetition, details are not described herein again.

It should be understood that the processor may be a central processing unit (Central Processing Unit, CPU), or the processor may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor or the processor may be any normal processor, or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information transmission system, comprising:
a power system control center (110), a network device (120), a transmission device (130), and at least one system terminal (140), wherein the network device (120) belongs to a wide area network,
some or all system terminals of the at least one system terminal (140) are configured to send at least one first report message to the transmission device (130), wherein the at least one first report message is transmitted by using a first network transmission protocol; and
the transmission device (130) is configured to send at least one second report message to the power system control center (110) by using the network device based on information in the at least one first report message, wherein the at least one second report message is transmitted by using a second network transmission protocol that is different from the first network transmission protocol;
wherein the system further comprises a first information processing device (150), and the first information processing device (150) is configured to:
receive the at least one first report message sent by some or all system terminals of the at least one system terminal (140);
process the at least one first report message based on content or a report time of the at least one first report message to obtain a processed message, wherein the processed message comprises the information in the at least one first report message;
send the processed message to the transmission device (130) by using the first network transmission protocol; and
correspondingly, in the aspect of sending at least one second report message to the power system control center by using the network device (120) based on information in the at least one first report message, the transmission device (130) is configured to:
generate the at least one second report message based on the processed message and the second network transmission protocol; and
send the at least one second report message to the power system control center (110) by using the network device.

2. The system according to claim 1, wherein in the aspect of sending at least one second report message to the power system control center (110) by using the network device based on information in the at least one first report message, the transmission device (130) is configured to:
process the at least one first report message based on content or a report time of the at least one first report message to obtain processed information;
generate the at least one second report message based on the processed information and the second network transmission protocol; and
send the at least one second report message to the power system control center (110) by using the network device.

3. The system according to claim 2, wherein in the aspect of processing the at least one first report message based on content or a report time of the at least one first report message, the transmission device (130) is configured to:
screen the information in the at least one first report message based on the content of the at least one first report message to obtain screened information; and
correspondingly, in the aspect of generating the at least one second report message based on the processed information and the second network transmission protocol, the transmission device (130) is configured to generate the at least one second report message based on the screened information and the second network transmission protocol; or
aggregate the information in the at least one first report message based on the report time of the at least one first report message to obtain aggregated information; and correspondingly, in the aspect of generating the at least one second report message based on the processed information and the second network transmission protocol, the transmission device (130) is configured to generate the at least one second report message based on the aggregated information and the second network transmission protocol.

4. The system according to claim 1, wherein in the aspect of processing the at least one first report message based on content or a report time of the at least one first report message to obtain a processed message, the first information processing device (150) is configured to:
screen the information in the at least one first report message based on the content of the at least one first report message to obtain the processed message; or
aggregate the information in the at least one first report message based on the report time of the at least one first report message to obtain the processed message.

5. The system according to claim 1, wherein the system further comprises a second information processing device (160), and the second information processing device (160) is configured to:
receive the at least one second report message sent by the transmission device;
process the at least one second report message based on content or a report time of the at least one second report message to obtain processed message; and
send the at least one processed message to the power system control center (110) by using the network device (120), wherein the at least one processed message is transmitted by using the second network transmission protocol.

6. The system according to claim 5, wherein in the aspect of processing the at least one second report message based on content or a report time of the at least one second report message, the second information processing device (160) is configured to:
screen information in the at least one second report message based on the content of the at least one second report message to obtain the processed message; or
aggregate information in the at least one second report message based on the report time of the at least one second report message to obtain the processed message.

7. An information transmission system, comprising:
a power system control center (210), a network device, (220) a first transmission device (240), a second transmission device (230), and at least one system terminal (250), wherein the network device (220) belongs to a wide area network,
some or all system terminals of the at least one system terminal (250) are configured to send at least one first report message to the first transmission device (240), wherein the at least one first report message is transmitted by using a first network transmission protocol;
the first transmission device (240) is configured to send at least one second report message to the second transmission device (230) based on information in the at least one first report message, wherein the at least one second report message is transmitted by using a second network transmission protocol that is different from the first network protocol; and
the second transmission device (230) is configured to send at least one third report message to the power system control center (210) by using the network device (220) based on information in the at least one second report message, wherein the at least one third report message is transmitted by using a third network transmission protocol that is different from the first network protocol and the second network transmission protocol;
wherein the system further comprises a first information processing device (260), and the first information processing device (260) is configured to:
receive the at least one first report message sent by some or all system terminals of the at least one system terminal (250);
process the at least one first report message based on content or a report time of the at least one first report message to obtain a first processed message, wherein the first processed message comprises the information in the at least one first report message;
send the first processed message to the first transmission device (240); and
correspondingly, in the aspect of sending at least one second report message to the second transmission device (230) based on information in the at least one first report message, the first transmission device (240) is configured to:
send the at least one second report message to the second transmission device (230) based on the first processed message.

8. The system according to claim 7, wherein in the aspect of sending at least one second report message to the second transmission device (230) based on information in the at least one first report message, the first transmission device (240) is configured to:
process the at least one first report message based on content or a report time of the at least one first report message to obtain first processed information;
generate the at least one second report message based on the first processed information and the second network transmission protocol; and
send the at least one second report message to the second transmission device (230).

9. The system according to claim 7 or 8, wherein in the aspect of sending at least one third report message to the power system control center (210) by using the network device (220) based on information in the at least one second report message, the second transmission device (230) is configured to:
process the at least one second report message based on content or a report time of the at least one second report message to obtain second processed information;
generate the at least one third report message based on the second processed information and the third network transmission protocol; and
send the at least one third report message to the power system control center (210) by using the network device (220).

10. The system according to claim 8, wherein in the aspect of processing the at least one first report message based on content or a report time of the at least one first report message, the first transmission device (240) is configured to:
screen the information in the at least one first report message based on the content of the at least one first report message to obtain first screened information; and correspondingly, in the aspect of generating the at least one second report message based on the first processed information and the second network transmission protocol, the first transmission device (240) is configured to generate the at least one second report message based on the first screened information and the second network transmission protocol; or
aggregate the information in the at least one first report message based on the report time of the at least one first report message to obtain first aggregated information; and correspondingly, in the aspect of generating the at least one second report message based on the first processed information and the second network transmission protocol, the first transmission device (240) is configured to generate the at least one second report message based on the first aggregated information and the second network transmission protocol.

11. The system according to claim 9, wherein in the aspect of processing the at least one second report message based on content or a report time of the at least one second report message to obtain second processed information, the second transmission device (230) is configured to:
screen the information in the at least one second report message based on the content of the at least one second report message to obtain second screened information; and correspondingly, in the aspect of generating the at least one third report message based on the second processed information and the third network transmission protocol, the second transmission device (230) is configured to generate the at least one third report message based on the second screened information and the third network transmission protocol; or
aggregate the information in the at least one second report message based on the report time of the at least one second report message to obtain second aggregated information; and correspondingly, in the aspect of generating the at least one third report message based on the second processed information and the third network transmission protocol, the second transmission device (230) is configured to generate the at least one third report message based on the second aggregated information and the third network transmission protocol.

12. The system according to claim 7, wherein the system further comprises a second information processing device (270), and the second information processing device (270) is configured to:
receive the at least one second report message sent by the second transmission device (230);
process the at least one second report message based on content or a report time of the at least one second report message to obtain a second processed message, wherein the second processed message comprises the information in the at least one second report message; and
send the second processed message to the second transmission device (230); and
correspondingly, in the aspect of sending at least one third report message to the power system control center (210) by using the network device (220) based on information in the at least one second report message, the second transmission device (230) is configured to:
send the at least one third report message to the power system control center (210) by using the network device (220) based on the second processed message.

13. The system according to claim7, wherein in the aspect of processing the at least one first report message based on content or a report time of the at least one first report message to obtain a first processed message, the first information processing device (240) is configured to:
screen the information in the at least one first report message based on the content of the at least one first report message to obtain the first processed message; or
aggregate the information in the at least one first report message based on the report time of the at least one first report message to obtain the first processed message.

14. The system according to claim 7, wherein the system further comprises a third information processing device (280), and the third information processing device (280) is configured to:
receive the at least one second report message sent by the first transmission device (240);
process the at least one second report message based on content or a report time of the at least one second report message to obtain a first processed message; and
send the first processed message to the second transmission device (230); and
correspondingly, the second transmission device (230) is configured to generate the at least one third report message based on the first processed message and the third network transmission protocol; and
send the third report message to the power system control center (210) by using the network device (220).

15. The system according to claim 14, wherein in the aspect of processing the at least one second report message based on content or a report time of the at least one second report message, the third information processing device (280) is configured to:
screen the information in the at least one second report message based on the content of the at least one second report message to obtain the first processed message; or
aggregate the information in the at least one second report message based on the time of the at least one second report message to obtain the first processed message.

## Patentansprüche

1. Informationsübertragungssystem, umfassend:
eine Leistungssystem-Steuerzentrale (110), eine Netzwerkvorrichtung (120), eine Sendevorrichtung (130) und mindestens ein System-Endgerät (140), wobei die Netzwerkvorrichtung (120) zu einem Weitverkehrsnetzwerk gehört,
einige oder alle System-Endgeräte des mindestens einen System-Endgeräts (140) zum Senden mindestens einer ersten Meldungsnachricht an die Sendevorrichtung (130) konfiguriert sind, wobei die mindestens eine Meldungsnachricht durch Verwenden eines ersten Netzwerkübertragungsprotokolls gesendet wird; und
die Sendevorrichtung (130) zum Senden mindestens einer zweiten Meldungsnachricht durch Verwenden der Netzwerkvorrichtung basierend auf Informationen in der mindestens einen ersten Meldungsnachricht an die Leistungssystem-Steuerzentrale (110) konfiguriert ist, wobei die mindestens eine zweite Meldungsnachricht durch Verwenden eines zweiten Netzwerkübertragungsprotokolls gesendet wird, das vom ersten Netzwerkübertragungsprotokoll verschieden ist;
wobei das System ferner eine erste Informationsverarbeitungsvorrichtung (150) umfasst, und die erste Informationsverarbeitungsvorrichtung (150) konfiguriert ist zum:
Empfangen der mindestens einen ersten Meldungsnachricht, die von einigen oder allen System-Endgeräten des mindestens einen System-Endgeräts (140) gesendet wird;
Verarbeiten der mindestens einen ersten Meldungsnachricht basierend auf Inhalt oder einer Meldezeit der mindestens einen ersten Meldungsnachricht, um eine verarbeitete Nachricht zu erhalten, wobei die verarbeitete Nachricht die Informationen in der mindestens einen ersten Meldungsnachricht umfasst;
Senden der verarbeiteten Nachricht durch Verwenden des ersten Netzwerkübertragungsprotokolls an die Sendevorrichtung (130); und
wobei die Sendevorrichtung (130) dementsprechend im Aspekt des Sendens mindestens einer zweiten Meldungsnachricht durch Verwenden der Netzwerkvorrichtung (120) basierend auf Informationen in der mindestens einen ersten Meldungsnachricht an die Leistungssystem-Steuerzentrale konfiguriert ist zum:
Erzeugen der mindestens einen zweiten Meldungsnachricht basierend auf der verarbeiteten Nachricht und dem zweiten Netzwerkübertragungsprotokoll; und
Senden der mindestens einen zweiten Meldungsnachricht durch Verwenden der Netzwerkvorrichtung an die Leistungssystem-Steuerzentrale (110).

2. System nach Anspruch 1, wobei die Sendevorrichtung (130) im Aspekt des Sendens mindestens einer zweiten Meldungsnachricht durch Verwenden der Netzwerkvorrichtung basierend auf Informationen in der mindestens einen ersten Meldungsnachricht an die Leistungssystem-Steuerzentrale (110) konfiguriert ist zum:
Verarbeiten der mindestens einen ersten Meldungsnachricht basierend auf Inhalt oder einer Meldezeit der mindestens einen ersten Meldungsnachricht, um verarbeitete Informationen zu erhalten;
Erzeugen der mindestens einen zweiten Meldungsnachricht basierend auf den verarbeiteten Informationen und dem zweiten Netzwerkübertragungsprotokoll; und
Senden der mindestens einen zweiten Meldungsnachricht durch Verwenden der Netzwerkvorrichtung an die Leistungssystem-Steuerzentrale (110).

3. System nach Anspruch 2, wobei die Sendevorrichtung (130) im Aspekt des Verarbeitens der mindestens einen ersten Meldungsnachricht basierend auf Inhalt oder einer Meldezeit der mindestens einen ersten Meldungsnachricht konfiguriert ist zum:
Überprüfen der Informationen in der mindestens einen ersten Meldungsnachricht basierend auf dem Inhalt der mindestens einen ersten Meldungsnachricht, um überprüfte Informationen zu erhalten; und
wobei die Sendevorrichtung (130) dementsprechend im Aspekt des Erzeugens der mindestens einen zweiten Meldungsnachricht basierend auf den verarbeiteten Informationen und dem zweiten Netzwerkübertragungsprotokoll zum Erzeugen der mindestens einen zweiten Meldungsnachricht basierend auf den überprüften Informationen und dem zweiten Netzwerkübertragungsprotokoll konfiguriert ist; oder Aggregieren der Informationen in der mindestens einen ersten Meldungsnachricht basierend auf der Meldezeit der mindestens einen ersten Meldungsnachricht, um aggregierte Informationen zu erhalten; und
wobei die Sendevorrichtung (130) dementsprechend im Aspekt des Erzeugens der mindestens einen zweiten Meldungsnachricht basierend auf den verarbeiteten Informationen und dem zweiten Netzwerkübertragungsprotokoll zum Erzeugen der mindestens einen zweiten Meldungsnachricht basierend auf den aggregierten Informationen und dem zweiten Netzwerkübertragungsprotokoll konfiguriert ist.

4. System nach Anspruch 1, wobei die erste Informationsverarbeitungsvorrichtung (150) im Aspekt des Verarbeitens der mindestens einen ersten Meldungsnachricht basierend auf Inhalt oder einer Meldezeit der mindestens einen ersten Meldungsnachricht zum Erhalten einer verarbeiteten Nachricht konfiguriert ist zum:
Überprüfen der Informationen in der mindestens einen ersten Meldungsnachricht basierend auf dem Inhalt der mindestens einen ersten Meldungsnachricht, um die verarbeitete Nachricht zu erhalten; oder
Aggregieren der Informationen in der mindestens einen ersten Meldungsnachricht basierend auf der Meldezeit der mindestens einen ersten Meldungsnachricht, um die verarbeitete Nachricht zu erhalten.

5. System nach Anspruch 1, wobei das System ferner eine zweite Informationsverarbeitungsvorrichtung (160) umfasst, und die zweite Informationsverarbeitungsvorrichtung (160) konfiguriert ist zum:
Empfangen der mindestens einen zweiten Meldungsnachricht, die von der Sendevorrichtung gesendet wird;
Verarbeiten der mindestens einen zweiten Meldungsnachricht basierend auf Inhalt oder einer Meldezeit der mindestens einen zweiten Meldungsnachricht, um eine verarbeitete Nachricht zu erhalten; und
Senden der mindestens einen verarbeiteten Nachricht durch Verwenden der Netzwerkvorrichtung (120) an die Leistungssystem-Steuerzentrale (110), wobei die mindestens eine verarbeitete Nachricht durch Verwenden des zweiten Netzwerkübertragungsprotokolls gesendet wird.

6. System nach Anspruch 5, wobei die zweite Informationsverarbeitungsvorrichtung (160) im Aspekt des Verarbeitens der mindestens einen zweiten Meldungsnachricht basierend auf Inhalt oder einer Meldezeit der mindestens einen zweiten Meldungsnachricht konfiguriert ist zum:
Überprüfen von Informationen in der mindestens einen zweiten Meldungsnachricht basierend auf dem Inhalt der mindestens einen zweiten Meldungsnachricht, um die verarbeitete Nachricht zu erhalten; oder
Aggregieren von Informationen in der mindestens einen zweiten Meldungsnachricht basierend auf der Meldezeit der mindestens einen zweiten Meldungsnachricht, um die verarbeitete Nachricht zu erhalten.

7. Informationsübertragungssystem, umfassend:
eine Leistungssystem-Steuerzentrale (210), eine Netzwerkvorrichtung (220), eine erste Sendevorrichtung (240), eine zweite Sendevorrichtung (230) und mindestens ein System-Endgerät (250), wobei die Netzwerkvorrichtung (220) zu einem Weitverkehrsnetzwerk gehört,
einige oder alle System-Endgeräte des mindestens einen System-Endgeräts (250) zum Senden mindestens einer ersten Meldungsnachricht an die erste Sendevorrichtung (240) konfiguriert sind, wobei die mindestens eine Meldungsnachricht durch Verwenden eines ersten Netzwerkübertragungsprotokolls gesendet wird;
die erste Sendevorrichtung (240) zum Senden mindestens einer zweiten Meldungsnachricht basierend auf Informationen in der mindestens einen ersten Meldungsnachricht an die die zweite Sendevorrichtung (230) konfiguriert ist, wobei die mindestens eine zweite Meldungsnachricht durch Verwenden eines zweiten Netzwerkübertragungsprotokolls gesendet wird, das vom ersten Netzwerkprotokoll verschieden ist; und
die zweite Sendevorrichtung (230) zum Senden mindestens einer dritten Meldungsnachricht durch Verwenden der Netzwerkvorrichtung (220) basierend auf Informationen in der mindestens einen zweiten Meldungsnachricht an die Leistungssystem-Steuerzentrale (210) konfiguriert ist, wobei die mindestens eine dritte Meldungsnachricht durch Verwenden eines dritten Netzwerkübertragungsprotokolls gesendet wird, das vom ersten Netzwerkprotokoll und vom zweiten Netzwerkübertragungsprotokoll verschieden ist;
wobei das System ferner eine erste Informationsverarbeitungsvorrichtung (260) umfasst, und die erste Informationsverarbeitungsvorrichtung (260) konfiguriert ist zum:
Empfangen der mindestens einen ersten Meldungsnachricht, die von einigen oder allen System-Endgeräten des mindestens einen System-Endgeräts (250) gesendet wird;
Verarbeiten der mindestens einen ersten Meldungsnachricht basierend auf Inhalt oder einer Meldezeit der mindestens einen ersten Meldungsnachricht, um eine erste verarbeitete Nachricht zu erhalten, wobei die erste verarbeitete Nachricht die Informationen in der mindestens einen ersten Meldungsnachricht umfasst;
Senden der ersten verarbeiteten Nachricht an die erste Sendevorrichtung (240); und
wobei die erste Sendevorrichtung (240) dementsprechend im Aspekt des Sendens mindestens einer zweiten Meldungsnachricht basierend auf Informationen in der mindestens einen ersten Meldungsnachricht an die die zweite Sendevorrichtung (230) konfiguriert ist zum:
Senden der mindestens einen zweiten Meldungsnachricht basierend auf der ersten verarbeiteten Nachricht an die zweite Sendevorrichtung (230).

8. System nach Anspruch 7, wobei die erste Sendevorrichtung (240) im Aspekt des Sendens mindestens einer zweiten Meldungsnachricht basierend auf Informationen in der mindestens einen ersten Meldungsnachricht an die zweite Sendevorrichtung (230) konfiguriert ist zum:
Verarbeiten der mindestens einen ersten Meldungsnachricht basierend auf Inhalt oder einer Meldezeit der mindestens einen ersten Meldungsnachricht, um erste verarbeitete Informationen zu erhalten;
Erzeugen der mindestens einen zweiten Meldungsnachricht basierend auf den ersten verarbeiteten Informationen und dem zweiten Netzwerkübertragungsprotokoll; und
Senden der mindestens einen zweiten Meldungsnachricht an die zweite Sendevorrichtung (230).

9. System nach Anspruch 7 oder 8, wobei die zweite Sendevorrichtung (230) im Aspekt des Sendens mindestens einer dritten Meldungsnachricht durch Verwenden der Netzwerkvorrichtung (220) basierend auf Informationen in der mindestens einen zweiten Meldungsnachricht an die Leistungssystem-Steuerzentrale (210) konfiguriert ist zum:
Verarbeiten der mindestens einen zweiten Meldungsnachricht basierend auf Inhalt oder einer Meldezeit der mindestens einen zweiten Meldungsnachricht, um zweite verarbeitete Informationen zu erhalten;
Erzeugen der mindestens einen dritten Meldungsnachricht basierend auf den zweiten verarbeiteten Informationen und dem dritten Netzwerkübertragungsprotokoll; und
Senden der mindestens einen dritten Meldungsnachricht durch Verwenden der Netzwerkvorrichtung (220) an die Leistungssystem-Steuerzentrale (210).

10. System nach Anspruch 8, wobei die erste Sendevorrichtung (240) im Aspekt des Verarbeitens der mindestens einen ersten Meldungsnachricht basierend auf Inhalt oder einer Meldezeit der mindestens einen ersten Meldungsnachricht konfiguriert ist zum:
Überprüfen der Informationen in der mindestens einen ersten Meldungsnachricht basierend auf dem Inhalt der mindestens einen ersten Meldungsnachricht, um erste überprüfte Informationen zu erhalten; und
wobei die erste Sendevorrichtung (240) dementsprechend im Aspekt des Erzeugens der mindestens einen zweiten Meldungsnachricht basierend auf den ersten verarbeiteten Informationen und dem zweiten Netzwerkübertragungsprotokoll zum Erzeugen der mindestens einen zweiten Meldungsnachricht basierend auf den ersten überprüften Informationen und dem zweiten Netzwerkübertragungsprotokoll konfiguriert ist; oder
Aggregieren der Informationen in der mindestens einen ersten Meldungsnachricht basierend auf der Meldezeit der mindestens einen ersten Meldungsnachricht, um erste aggregierte Informationen zu erhalten; und
wobei die erste Sendevorrichtung (240) dementsprechend im Aspekt des Erzeugens der mindestens einen zweiten Meldungsnachricht basierend auf den ersten verarbeiteten Informationen und dem zweiten Netzwerkübertragungsprotokoll zum Erzeugen der mindestens einen zweiten Meldungsnachricht basierend auf den ersten aggregierten Informationen und dem zweiten Netzwerkübertragungsprotokoll konfiguriert ist.

11. System nach Anspruch 9, wobei die zweite Sendevorrichtung (230) im Aspekt des Verarbeitens der mindestens einen zweiten Meldungsnachricht basierend auf Inhalt oder einer Meldezeit der mindestens einen zweiten Meldungsnachricht zum Erhalten von zweiten verarbeiteten Informationen konfiguriert ist zum:
Überprüfen der Informationen in der mindestens einen zweiten Meldungsnachricht basierend auf dem Inhalt der mindestens einen zweiten Meldungsnachricht, um zweite überprüfte Informationen zu erhalten; und
wobei die zweite Sendevorrichtung (230) dementsprechend im Aspekt des Erzeugens der mindestens einen dritten Meldungsnachricht basierend auf den zweiten verarbeiteten Informationen und dem dritten Netzwerkübertragungsprotokoll zum Erzeugen der mindestens einen dritten Meldungsnachricht basierend auf den zweiten überprüften Informationen und dem dritten Netzwerkübertragungsprotokoll konfiguriert ist; oder
Aggregieren der Informationen in der mindestens einen zweiten Meldungsnachricht basierend auf der Meldezeit der mindestens einen zweiten Meldungsnachricht, um zweite aggregierte Informationen zu erhalten; und
wobei die zweite Sendevorrichtung (230) dementsprechend im Aspekt des Erzeugens der mindestens einen dritten Meldungsnachricht basierend auf den zweiten verarbeiteten Informationen und dem dritten Netzwerkübertragungsprotokoll zum Erzeugen der mindestens einen dritten Meldungsnachricht basierend auf den zweiten aggregierten Informationen und dem dritten Netzwerkübertragungsprotokoll konfiguriert ist.

12. System nach Anspruch 7, wobei das System ferner eine zweite Informationsverarbeitungsvorrichtung (270) umfasst, und die zweite Informationsverarbeitungsvorrichtung (270) konfiguriert ist zum:
Empfangen der mindestens einen zweiten Meldungsnachricht, die von der Sendevorrichtung (230) gesendet wird;
Verarbeiten der mindestens einen zweiten Meldungsnachricht basierend auf Inhalt oder einer Meldezeit der mindestens einen zweien Meldungsnachricht, um eine zweite verarbeitete Nachricht zu erhalten, wobei die zweite verarbeitete Nachricht die Informationen in der mindestens einen zweiten Meldungsnachricht umfasst; und
Senden der zweiten verarbeiteten Nachricht an die zweite Sendevorrichtung (230); und
wobei die zweite Sendevorrichtung (230) dementsprechend im Aspekt des Sendens mindestens einer dritten Meldungsnachricht durch Verwenden der Netzwerkvorrichtung (220) basierend auf Informationen in der mindestens einen zweiten Meldungsnachricht an die Leistungssystem-Steuerzentrale (210) konfiguriert ist zum:
Senden der mindestens einen dritten Meldungsnachricht durch Verwenden der Netzwerkvorrichtung (220) basierend auf der zweiten verarbeiteten Nachricht an die Leistungssystem-Steuerzentrale (210).

13. System nach Anspruch 7, wobei die erste Informationsverarbeitungsvorrichtung (240) im Aspekt des Verarbeitens der mindestens einen ersten Meldungsnachricht basierend auf Inhalt oder einer Meldezeit der mindestens einen ersten Meldungsnachricht zum Erhalten einer ersten verarbeiteten Nachricht konfiguriert ist zum:
Überprüfen der Informationen in der mindestens einen ersten Meldungsnachricht basierend auf dem Inhalt der mindestens einen ersten Meldungsnachricht, um die erste verarbeitete Nachricht zu erhalten; oder
Aggregieren der Informationen in der mindestens einen ersten Meldungsnachricht basierend auf der Meldezeit der mindestens einen ersten Meldungsnachricht, um die erste verarbeitete Nachricht zu erhalten.

14. System nach Anspruch 7, wobei das System ferner eine dritte Informationsverarbeitungsvorrichtung (280) umfasst, und die dritte Informationsverarbeitungsvorrichtung (280) konfiguriert ist zum:
Empfangen der mindestens einen zweiten Meldungsnachricht, die von der ersten Sendevorrichtung (240) gesendet wird;
Verarbeiten der mindestens einen zweiten Meldungsnachricht basierend auf Inhalt oder einer Meldezeit der mindestens einen zweiten Meldungsnachricht, um eine erste verarbeitete Nachricht zu erhalten; und
Senden der ersten verarbeiteten Nachricht an die zweite Sendevorrichtung (230); und
wobei die zweite Sendevorrichtung (230) dementsprechend zum Erzeugen der mindestens einen dritten Meldungsnachricht basierend auf der ersten verarbeiteten Nachricht und dem dritten Netzwerkübertragungsprotokoll konfiguriert ist; und
Senden der dritten Meldungsnachricht durch Verwenden der Netzwerkvorrichtung (220) an die Leistungssystem-Steuerzentrale (210).

15. System nach Anspruch 14, wobei die dritte Informationsverarbeitungsvorrichtung (280) im Aspekt des Verarbeitens der mindestens einen zweiten Meldungsnachricht basierend auf Inhalt oder einer Meldezeit der mindestens einen zweiten Meldungsnachricht konfiguriert ist zum:
Überprüfen der Informationen in der mindestens einen zweiten Meldungsnachricht basierend auf dem Inhalt der mindestens einen zweiten Meldungsnachricht, um die erste verarbeitete Nachricht zu erhalten; oder
Aggregieren der Informationen in der mindestens einen zweiten Meldungsnachricht basierend auf der Zeit der mindestens einen zweiten Meldungsnachricht, um die erste verarbeitete Nachricht zu erhalten.

## Revendications

1. Système de transmission d'informations, comprenant :
un centre de commande de système d'énergie (110), un dispositif réseau (120), un dispositif de transmission (130) et au moins un terminal système (140), dans lequel le dispositif réseau (120) appartient à un réseau étendu,
certains ou tous les terminaux système de l'au moins un terminal système (140) sont configurés pour envoyer au moins un premier message de compte-rendu au dispositif de transmission (130), dans lequel l'au moins un premier message de compte-rendu est transmis en utilisant un premier protocole de transmission de réseau ; et
le dispositif de transmission (130) est configuré pour envoyer au moins un deuxième message de compte-rendu au centre de commande de système d'énergie (110) en utilisant le dispositif réseau sur la base d'informations dans l'au moins un premier message de compte-rendu, l'au moins un deuxième message de compte-rendu étant transmis en utilisant un deuxième protocole de transmission de réseau qui est différent du premier protocole de transmission de réseau ;
le système comprenant en outre un premier dispositif de traitement d'informations (150), et le premier dispositif de traitement d'informations (150) étant configuré pour :
recevoir l'au moins un premier message de compte-rendu envoyé par certains ou tous les terminaux système de l'au moins un terminal système (140) ;
traiter l'au moins un premier message de compte-rendu sur la base d'un contenu ou d'un moment de compte-rendu de l'au moins un premier message de compte-rendu pour obtenir un message traité, le message traité comprenant les informations dans l'au moins un premier message de compte-rendu ;
envoyer le message traité au dispositif de transmission (130) en utilisant le premier protocole de transmission de réseau ; et
de manière correspondante, en ce qui concerne l'aspect consistant à envoyer au moins un deuxième message de compte-rendu au centre de commande de système d'énergie en utilisant le dispositif réseau (120) sur la base d'informations dans l'au moins un premier message de compte-rendu, le dispositif de transmission (130) est configuré pour :
générer l'au moins un deuxième message de compte-rendu sur la base du message traité et du deuxième protocole de transmission de réseau ; et
envoyer l'au moins un deuxième message de compte-rendu au centre de commande de système d'énergie (110) en utilisant le dispositif réseau.

2. Système selon la revendication 1, dans lequel en ce qui concerne l'aspect consistant à envoyer au moins un deuxième message de compte-rendu au centre de commande de système d'énergie (110) en utilisant le dispositif réseau sur la base d'informations dans l'au moins un premier message de compte-rendu, le dispositif de transmission (130) est configuré pour :
traiter l'au moins un premier message de compte-rendu sur la base d'un contenu ou d'un moment de compte-rendu de l'au moins un premier message de compte-rendu pour obtenir des informations traitées ;
générer l'au moins un deuxième message de compte-rendu sur la base des informations traitées et du deuxième protocole de transmission de réseau ; et
envoyer l'au moins un deuxième message de compte-rendu au centre de commande de système d'énergie (110) en utilisant le dispositif réseau.

3. Système selon la revendication 2, dans lequel en ce qui concerne l'aspect consistant à traiter l'au moins un premier message de compte-rendu sur la base d'un contenu ou d'un moment de compte-rendu de l'au moins un premier message de compte-rendu, le dispositif de transmission (130) est configuré pour :
filtrer les informations dans l'au moins un premier message de compte-rendu sur la base du contenu de l'au moins un premier message de compte-rendu pour obtenir des informations filtrées ; et
de manière correspondante, en ce qui concerne l'aspect consistant à générer l'au moins un deuxième message de compte-rendu sur la base des informations traitées et
du deuxième protocole de transmission de réseau, le dispositif de transmission (130) est configuré pour générer l'au moins un deuxième message de compte-rendu sur la base des informations filtrées et du deuxième protocole de transmission de réseau ; ou
agréger les informations dans l'au moins un premier message de compte-rendu sur la base du moment de compte-rendu de l'au moins un premier message de compte-rendu pour obtenir des informations agrégées ; et de manière correspondante, en ce qui concerne l'aspect consistant à générer l'au moins un deuxième message de compte-rendu sur la base des informations traitées et du deuxième protocole de transmission de réseau, le dispositif de transmission (130) est configuré pour générer l'au moins un deuxième message de compte-rendu sur la base des informations agrégées et du deuxième protocole de transmission de réseau.

4. Système selon la revendication 1, dans lequel, en ce qui concerne l'aspect consistant à traiter l'au moins un premier message de compte-rendu sur la base d'un contenu ou d'un moment de compte-rendu de l'au moins un premier message de compte-rendu pour obtenir un message traité, le premier dispositif de traitement d'informations (150) est configuré pour :
filtrer les informations dans l'au moins un premier message de compte-rendu sur la base du contenu de l'au moins un premier message de compte-rendu pour obtenir le message traité ; ou
agréger les informations dans l'au moins un premier message de compte-rendu sur la base du moment de compte-rendu de l'au moins un premier message de compte-rendu pour obtenir le message traité.

5. Système selon la revendication 1, le système comprenant en outre un deuxième dispositif de traitement d'informations (160), et le deuxième dispositif de traitement d'informations (160) étant configuré pour :
recevoir l'au moins un deuxième message de compte-rendu envoyé par le dispositif de transmission ;
traiter l'au moins un deuxième message de compte-rendu sur la base d'un contenu ou d'un moment de compte-rendu de l'au moins un deuxième message de compte-rendu pour obtenir un message traité ; et
envoyer l'au moins un message traité au centre de commande de système d'énergie (110) en utilisant le dispositif réseau (120), dans lequel l'au moins un message traité est transmis en utilisant le deuxième protocole de transmission de réseau.

6. Système selon la revendication 5, dans lequel, en ce qui concerne l'aspect consistant à traiter l'au moins un deuxième message de compte-rendu sur la base d'un contenu ou d'un moment de compte-rendu de l'au moins un deuxième message de compte-rendu, le deuxième dispositif de traitement d'informations (160) est configuré pour :
filtrer les informations dans l'au moins un deuxième message de compte-rendu sur la base du contenu de l'au moins un deuxième message de compte-rendu pour obtenir le message traité ; ou
agréger des informations dans l'au moins un deuxième message de compte-rendu sur la base du moment de compte-rendu de l'au moins un deuxième message de compte-rendu pour obtenir le message traité.

7. Système de transmission d'informations, comprenant :
un centre de commande de système d'énergie (210), un dispositif réseau (220), un premier dispositif de transmission (240), un deuxième dispositif de transmission (230) et au moins un terminal système (250), dans lequel le dispositif réseau (220) appartient à un réseau étendu,
certains ou tous les terminaux système de l'au moins un terminal système (250) sont configurés pour envoyer au moins un premier message de compte-rendu au premier dispositif de transmission (240), dans lequel l'au moins un premier message de compte-rendu est transmis en utilisant un premier protocole de transmission de réseau ;
le premier dispositif de transmission (240) est configuré pour envoyer au moins un deuxième message de compte-rendu au deuxième dispositif de transmission (230) sur la base d'informations dans l'au moins un premier message de compte-rendu, dans lequel l'au moins un deuxième message de compte-rendu est transmis en utilisant un deuxième protocole de transmission de réseau qui est différent du premier protocole de réseau ; et
le deuxième dispositif de transmission (230) est configuré pour envoyer au moins un troisième message de compte-rendu au centre de commande de système d'énergie (210) en utilisant le dispositif réseau (220) sur la base d'informations dans l'au moins un deuxième message de compte-rendu, dans lequel l'au moins un troisième message de compte-rendu est transmis en utilisant un troisième protocole de transmission de réseau qui est différent du premier protocole de réseau et du deuxième protocole de transmission de réseau ;
le système comprenant en outre un premier dispositif de traitement d'informations (260), et le premier dispositif de traitement d'informations (260) étant configuré pour :
recevoir l'au moins un premier message de compte-rendu envoyé par certains ou tous les terminaux système de l'au moins un terminal système (250) ;
traiter l'au moins un premier message de compte-rendu sur la base d'un contenu ou d'un moment de compte-rendu de l'au moins un premier message de compte-rendu pour obtenir un premier message traité, dans lequel le premier message traité comprend les informations dans l'au moins un premier message de compte-rendu ;
envoyer le premier message traité au premier dispositif de transmission (240) ; et
de manière correspondante, en ce qui concerne l'aspect consistant à envoyer au moins un deuxième message de compte-rendu au deuxième dispositif de transmission (230) sur la base d'informations dans l'au moins un premier message de compte-rendu, le premier dispositif de transmission (240) est configuré pour :
envoyer l'au moins un deuxième message de compte-rendu au deuxième dispositif de transmission (230) sur la base du premier message traité.

8. Système selon la revendication 7, dans lequel, en ce qui concerne l'aspect consistant à envoyer au moins un deuxième message de compte-rendu au deuxième dispositif de transmission (230) sur la base d'informations dans l'au moins un premier message de compte-rendu, le premier dispositif de transmission (240) est configuré pour :
traiter l'au moins un premier message de compte-rendu sur la base d'un contenu ou d'un moment de compte-rendu de l'au moins un premier message de compte-rendu pour obtenir des premières informations traitées ;
générer l'au moins un deuxième message de compte-rendu sur la base des premières informations traitées et du deuxième protocole de transmission de réseau ; et
envoyer l'au moins un deuxième message de compte-rendu au deuxième dispositif de transmission (230).

9. Système selon la revendication 7 ou 8, dans lequel, en ce qui concerne l'aspect consistant à envoyer au moins un troisième message de compte-rendu au centre de commande de système d'énergie (210) en utilisant le dispositif réseau (220) sur la base d'informations dans l'au moins un deuxième message de compte-rendu, le deuxième dispositif de transmission (230) est configuré pour :
traiter l'au moins un deuxième message de compte-rendu sur la base d'un contenu ou d'un moment de compte-rendu de l'au moins un deuxième message de compte-rendu pour obtenir des deuxièmes informations traitées ;
générer l'au moins un troisième message de compte-rendu sur la base des deuxièmes informations traitées et du troisième protocole de transmission de réseau ; et
envoyer l'au moins un troisième message de compte-rendu au centre de commande de système d'énergie (210) en utilisant le dispositif réseau (220).

10. Système selon la revendication 8, dans lequel, en ce qui concerne l'aspect consistant à traiter l'au moins un premier message de compte-rendu sur la base d'un contenu ou d'un moment de compte-rendu de l'au moins un premier message de compte-rendu, le premier dispositif de transmission (240) est configuré pour :
filtrer les informations dans l'au moins un premier message de compte-rendu sur la base du contenu de l'au moins un premier message de compte-rendu pour obtenir des premières informations filtrées ; et de manière correspondante, en ce qui concerne l'aspect consistant à générer l'au moins un deuxième message de compte-rendu sur la base des premières informations traitées et du deuxième protocole de transmission de réseau, le premier dispositif de transmission (240) est configuré pour générer l'au moins un deuxième message de compte-rendu sur la base des premières informations filtrées et du deuxième protocole de transmission de réseau ; ou
agréger les informations dans l'au moins un premier message de compte-rendu sur la base du moment de compte-rendu de l'au moins un premier message de compte-rendu pour obtenir des premières informations agrégées ; et de manière correspondante, en ce qui concerne l'aspect consistant à générer l'au moins un deuxième message de compte-rendu sur la base des premières informations traitées et du deuxième protocole de transmission de réseau, le premier dispositif de transmission (240) est configuré pour générer l'au moins un deuxième message de compte-rendu sur la base des premières informations agrégées et du deuxième protocole de transmission de réseau.

11. Système selon la revendication 9, dans lequel, en ce qui concerne l'aspect consistant à traiter l'au moins un deuxième message de compte-rendu sur la base d'un contenu ou d'un moment de compte-rendu de l'au moins un deuxième message de compte-rendu pour obtenir des deuxièmes informations traitées, le deuxième dispositif de transmission (230) est configuré pour :
filtrer les informations dans l'au moins un deuxième message de compte-rendu sur la base du contenu de l'au moins un deuxième message de compte-rendu pour obtenir des deuxièmes informations filtrées ; et de manière correspondante, en ce qui concerne l'aspect consistant à générer l'au moins un troisième message de compte-rendu sur la base des deuxièmes informations traitées et du troisième protocole de transmission de réseau, le deuxième dispositif de transmission (230) est configuré pour générer l'au moins un troisième message de compte-rendu sur la base des deuxièmes informations filtrées et du troisième protocole de transmission de réseau ; ou
agréger les informations dans l'au moins un deuxième message de compte-rendu sur la base du moment de compte-rendu de l'au moins un deuxième message de compte-rendu pour obtenir des deuxièmes informations agrégées ; et de manière correspondante, en ce qui concerne l'aspect consistant à générer l'au moins un troisième message de compte-rendu sur la base des deuxièmes informations traitées et du troisième protocole de transmission de réseau, le deuxième dispositif de transmission (230) est configuré pour générer l'au moins un troisième message de compte-rendu sur la base des deuxièmes informations agrégées et du troisième protocole de transmission de réseau.

12. Système selon la revendication 7, le système comprenant en outre un deuxième dispositif de traitement d'informations (270), et le deuxième dispositif de traitement d'informations (270) étant configuré pour :
recevoir l'au moins un deuxième message de compte-rendu envoyé par le deuxième dispositif de transmission (230) ;
traiter l'au moins un deuxième message de compte-rendu sur la base d'un contenu ou d'un moment de compte-rendu de l'au moins un deuxième message de compte-rendu pour obtenir un deuxième message traité, dans lequel le deuxième message traité comprend les informations dans l'au moins un deuxième message de compte-rendu ; et
envoyer le deuxième message traité au deuxième dispositif de transmission (230) ; et
de manière correspondante, en ce qui concerne l'aspect consistant à envoyer au moins un troisième message de compte-rendu au centre de commande de système d'énergie (210) en utilisant le dispositif réseau (220) sur la base d'informations dans l'au moins un deuxième message de compte-rendu, le deuxième dispositif de transmission (230) est configuré pour :
envoyer l'au moins un troisième message de compte-rendu au centre de commande de système d'énergie (210) en utilisant le dispositif réseau (220) sur la base du deuxième message traité.

13. Système selon la revendication 7, dans lequel en ce qui concerne l'aspect consistant à traiter l'au moins un premier message de compte-rendu sur la base d'un contenu ou d'un moment de compte-rendu de l'au moins un premier message de compte-rendu pour obtenir un premier message traité, le premier dispositif de traitement d'informations (240) est configuré pour :
filtrer les informations dans l'au moins un premier message de compte-rendu sur la base du contenu de l'au moins un premier message de compte-rendu pour obtenir le premier message traité ; ou
agréger les informations dans l'au moins un premier message de compte-rendu sur la base du moment de compte-rendu de l'au moins un premier message de compte-rendu pour obtenir le premier message traité.

14. Système selon la revendication 7, le système comprenant en outre un troisième dispositif de traitement d'informations (280), et le troisième dispositif de traitement d'informations (280) étant configuré pour :
recevoir l'au moins un deuxième message de compte-rendu envoyé par le premier dispositif de transmission (240) ;
traiter l'au moins un deuxième message de compte-rendu sur la base d'un contenu ou d'un moment de compte-rendu de l'au moins un deuxième message de compte-rendu pour obtenir un premier message traité ; et
envoyer le premier message traité au deuxième dispositif de transmission (230) ; et
de manière correspondante, le deuxième dispositif de transmission (230) est configuré pour générer l'au moins un troisième message de compte-rendu sur la base du premier message traité et du troisième protocole de transmission de réseau ; et
envoyer le troisième message de compte-rendu au centre de commande de système d'énergie (210) en utilisant le dispositif réseau (220).

15. Système selon la revendication 14, dans lequel, en ce qui concerne l'aspect consistant à traiter l'au moins un deuxième message de compte-rendu sur la base d'un contenu ou d'un moment de compte-rendu de l'au moins un deuxième message de compte-rendu, le troisième dispositif de traitement d'informations (280) est configuré pour :
filtrer les informations dans l'au moins un deuxième message de compte-rendu sur la base du contenu de l'au moins un deuxième message de compte-rendu pour obtenir le premier message traité ; ou
agréger les informations dans l'au moins un deuxième message de compte-rendu sur la base du temps de l'au moins un deuxième message de compte-rendu pour obtenir le premier message traité.
